# EUROPEAN PATENT APPLICATION

(11) **EP 4 794 079 A1**
(43) Date of publication of application: **19.08.2026**
(21) Application number: 26153383.0
(22) Date of filing: 22.01.2026
(51) Int. Cl.: H01M 50/242, H01M 10/42, H01M 10/48, H01M 50/209, H01M 50/507, H01M 50/519, H01M 50/588

(54) **BATTERY PACK**

(30) Priority: 14.02.2025 KR 20250019384
(71) Applicant: SAMSUNG SDI CO., LTD., Yongin-si, Gyeonggi-do 17084 (KR)
(72) Inventor: PARK, Kyung Hoon, 16678 Suwon-si, Gyeonggi-do (KR); KWON, Young Hwan, 16678 Suwon-si, Gyeonggi-do (KR); HONG, Su Been, 16678 Suwon-si, Gyeonggi-do (KR)
(74) Representative: Gulde & Partner

(57) **Abstract**

A battery pack includes a pack housing, a plurality of battery cells accommodated in the pack housing and including terminals protruding to a side, and a busbar-film assembly including a plurality of first busbars to allow the terminals of a pair of battery cells located adjacent to each other among the plurality of battery cells to be electrically connected, a first film and a second film coupled to each other with the plurality of first busbars arranged therebetween, and a first deformation area deformable by an external force between a pair of first busbars adjacent to each other among the plurality of first busbars.

## Description

### BACKGROUND

### 1. Field

Aspects of embodiments of the present disclosure relate to a battery pack.

### 2. Description of the Related Art

In general, with the rapid spread of electronic devices using batteries, such as mobile phones, notebook computers, and electric vehicles, the demand for secondary batteries with high energy density and high capacity has rapidly increased. Accordingly, research and development for improving the performance of lithium secondary batteries is being actively conducted.

A lithium secondary battery is a battery which includes a positive electrode material and a negative electrode material, each of which includes an active material capable of intercalating and deintercalating lithium ions, and an electrolyte in which electrical energy is produced through oxidation and reduction reactions when lithium ions are intercalated/deintercalated into/from the positive electrode and the negative electrode.

Lithium secondary batteries can be used in the form of a battery pack including a plurality of battery cells connected in series and/or in parallel and a battery management system (BMS) that controls charging/discharging of the plurality of battery cells.

The aforementioned information disclosed in this background section is provided for enhancement of understanding of the background technology of the present disclosure and may contain information that does not constitute the related art.

### SUMMARY

The invention is defined by the appended claims. The description that follows is subjected to this limitation. Any disclosure lying outside the scope of said claims is only intended for illustrative as well as comparative purposes.

According to an aspect of embodiments of the present disclosure, a lightweight and miniaturized battery pack is provided by removing a busbar holder that supports a busbar.

According to another aspect of embodiments of the present disclosure, a battery pack in which a circuit unit is not disconnected if a battery cell swells is provided.

According to one or more embodiments of the present invention, a battery pack includes a pack housing, a plurality of battery cells accommodated in the pack housing and including terminals protruding to a side, and a busbar-film assembly including a plurality of first busbars to allow the terminals of a pair of battery cells disposed adjacent to each other among the plurality of battery cells to be electrically connected, a first film and a second film coupled to each other with the plurality of first busbars therebetween, and a first deformation area deformable by an external force between a pair of first busbars adjacent to each other among the plurality of first busbars.

In the first deformation area, the first film may have a first side slot having a plurality of side through-holes spaced apart from each other and arranged in a line, and the second film may have a second side slot overlapping the first side slot and open toward an edge of the second film.

The first side slot may further include a bridge configured to be ruptured by an external force and extending in a direction intersecting a direction in which the plurality of side through-holes are arranged, such that the plurality of side through-holes are separated, and when the bridge is ruptured, the plurality of the side through-holes may be connected.

A width of the bridge may be smallest at a midpoint of a length of the bridge.

Some battery cells of the plurality of battery cells may be arranged in a line along a first column, remaining battery cells of the plurality of battery cells may be arranged in a line along a second column, and the busbar-film assembly may further include a plurality of second busbars t0 allow the terminals of the battery cells belonging to the first column to be electrically connected to the terminals of the battery cells belonging to the second column.

The busbar-film assembly may further have a second deformation area which is deformable by an external force and located between a pair of second busbars adjacent to each other among the plurality of second busbars.

In the second deformation area, the first film may have a first central slot having a plurality of central through-holes spaced apart from each other and arranged in a line, and the second film may haves a second central slot, which extends in a direction in which the plurality of central through-holes are arranged, to overlap the first central slot.

The busbar-film assembly may further include a circuit unit between the first film and the second film to electrically connect the first busbars thereto.

The circuit unit may include a flexible circuit body which is bendable, a curved extension protruding from the flexible circuit body and extending along a curved path, and a voltage sensing terminal configured to connect the curved extension to the first busbar.

The second film may include a voltage sensing terminal exposure hole which is open to expose the voltage sensing terminal.

The busbar-film assembly may further have a third deformation area in which the curved extension is not attached to the first film and the second film and is deformable by an external force.

In the third deformation area, the second film may have a second film curved extension exposure through-hole which is open to expose the curved extension and the voltage sensing terminal.

In the third deformation area, the first film may have a first film curved extension exposure through-hole which is open to expose the curved extension and the voltage sensing terminal.

In the third deformation area, the circuit unit may include a fracture inducing portion which is connected to the curved extension such that a curved shape of the curved extension is maintained, and if an external force is applied, is fractured such that the curved shape of the curved extension is not maintained.

The circuit unit may have a circuit unit through-hole located outside the curved extension, and the first film may have a first film through-hole overlapping the circuit unit through-hole.

### BRIEF DESCRIPTION OF THE DRAWINGS

The above and other aspects, objects, features, and advantages of the present disclosure will become more apparent to those of ordinary skill in the art by describing some embodiments thereof in further detail with reference to the accompanying drawings, in which:
FIG. 1 is an exploded perspective view of a battery pack according to an embodiment of the present disclosure;
FIG. 2 is an enlarged perspective view of a cell stack of the battery pack of FIG. 1;
FIG. 3 is a cross-sectional view along the line S1-S1 of FIG. 2;
FIG. 4 is an exploded perspective view illustrating a configuration of an electrode assembly of FIG. 3;
FIG. 5 is a plan view of a busbar-film assembly of FIG. 1;
FIG. 6 is an exploded perspective view of the busbar-film assembly of FIG. 5 from above;
FIG. 7 is an exploded perspective view of the busbar-film assembly of FIG. 5 from below;
FIG. 8 is a plan view of a busbar and a circuit unit of FIG. 6;
FIG. 9 is a plan view of a first film of FIG. 6;
FIG. 10 is a plan view of a second film of FIG. 6;
FIG. 11 is a cross-sectional view along the line S2-S2 of FIG. 5;
FIG. 12 is an enlarged view of a region "A" of FIG. 1;
FIG. 13 is an enlarged view of a region "B" of FIG. 5;
FIG. 14 is an enlarged plan view illustrating a part of a busbar-film assembly included in a battery pack according to another embodiment of the present disclosure and is a view of a part corresponding to region "B" of FIG. 13;
FIG. 15 is a plan view of a busbar and a circuit unit included in the busbar-film assembly of FIG. 14 and is an enlarged view of a part corresponding to FIG. 14;
FIG. 16 is a plan view of a first film included in the busbar-film assembly of FIG. 14 and is an enlarged view of a part corresponding to FIG. 14;
FIG. 17 is a plan view of a second film included in the busbar-film assembly of FIG. 14 and is an enlarged view of a part corresponding to FIG. 14;
FIG. 18 is an enlarged plan view illustrating a part of a busbar-film assembly included in a battery pack according to another embodiment of the present disclosure and is a view of a part corresponding to FIG. 13;
FIG. 19 is a plan view of a busbar and a circuit unit included in the busbar-film assembly of FIG. 18 and is an enlarged view of a part corresponding to FIG. 18; and
FIG. 20 is a plan view of a first film included in the busbar-film assembly of FIG. 18 and is an enlarged view of a part corresponding to FIG. 18.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein are to be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

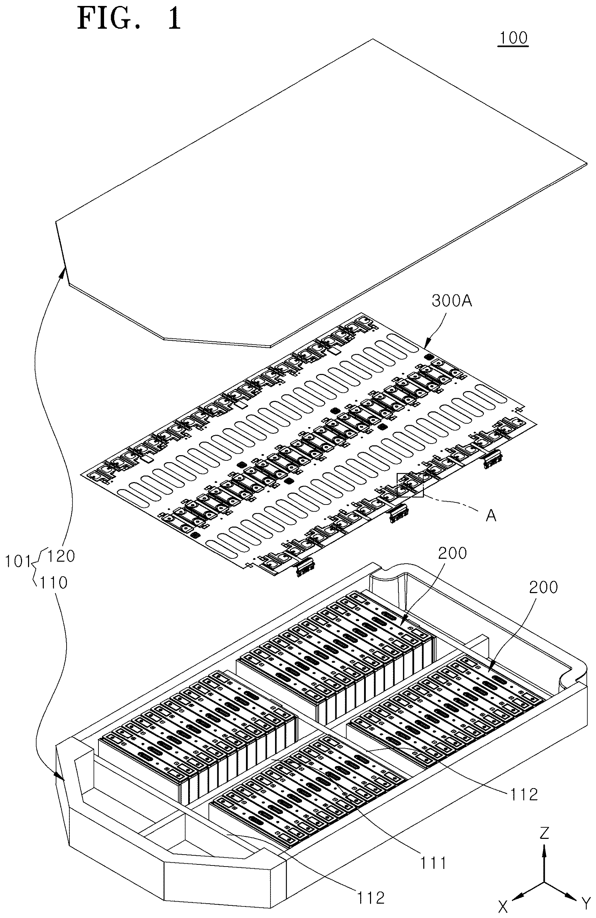

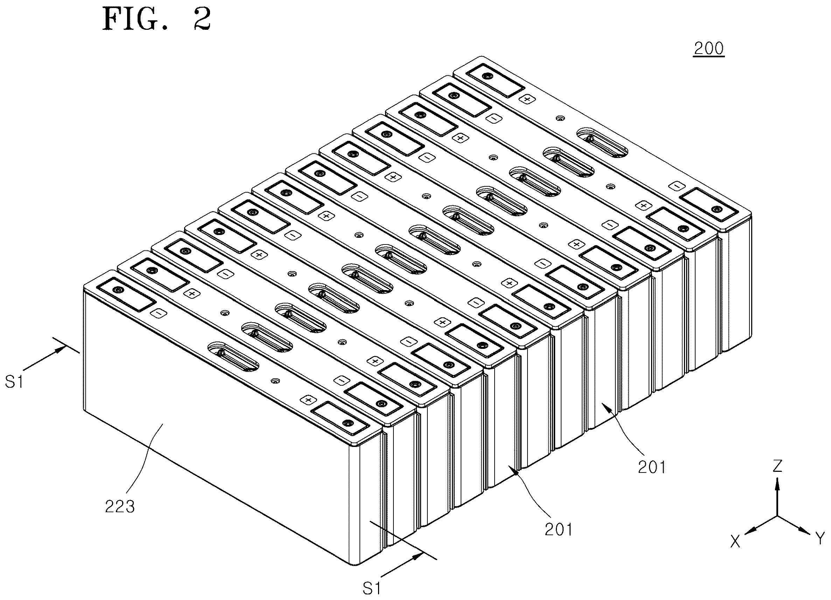

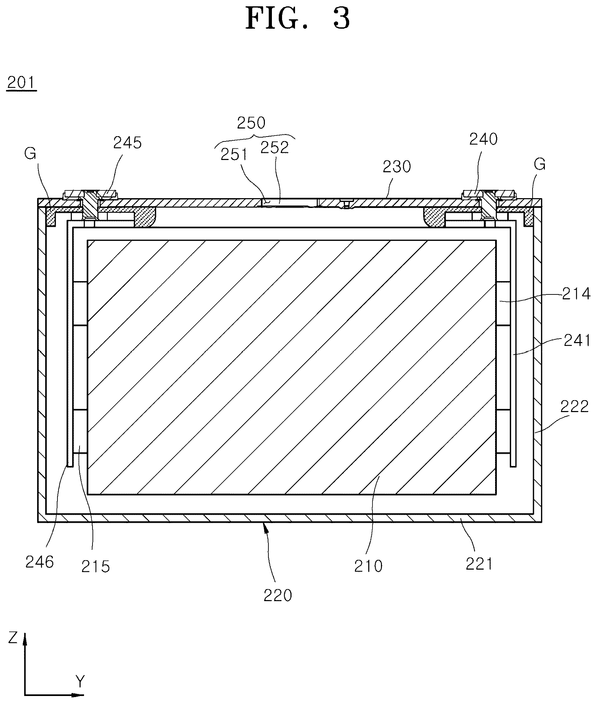

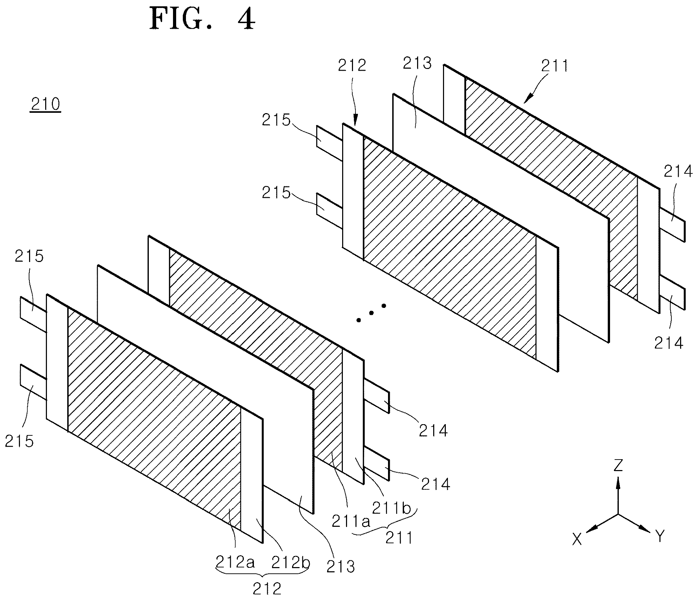

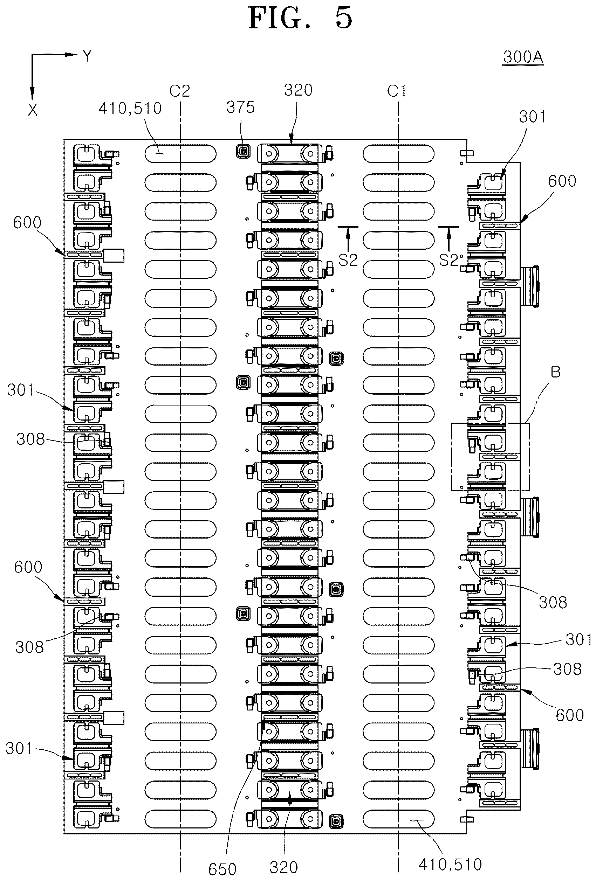

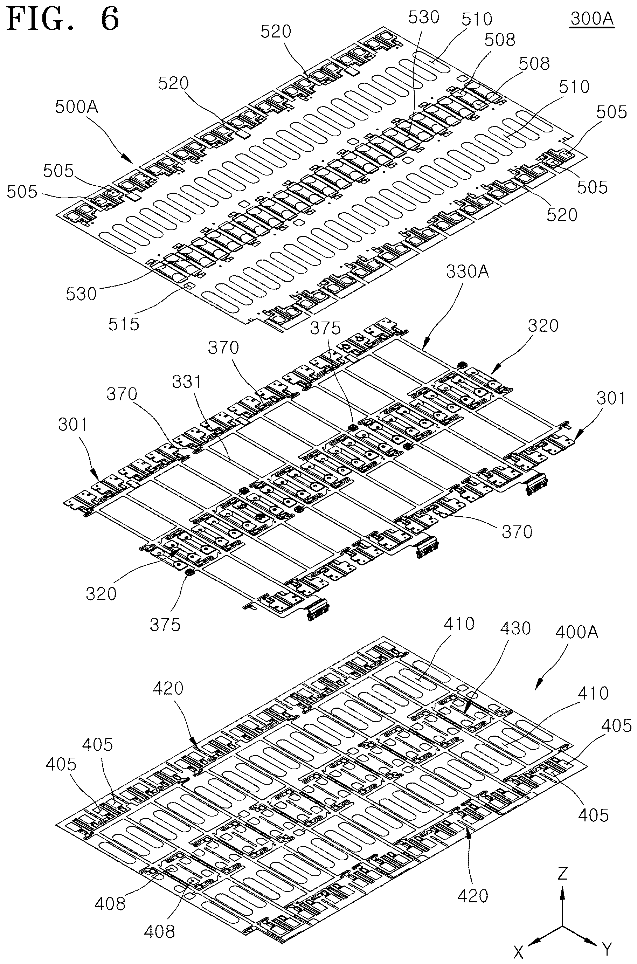

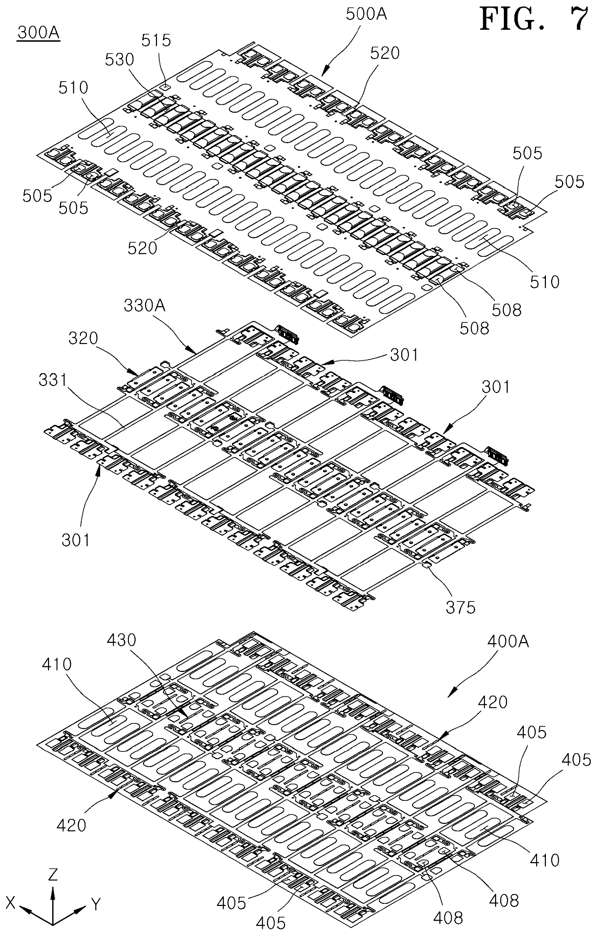

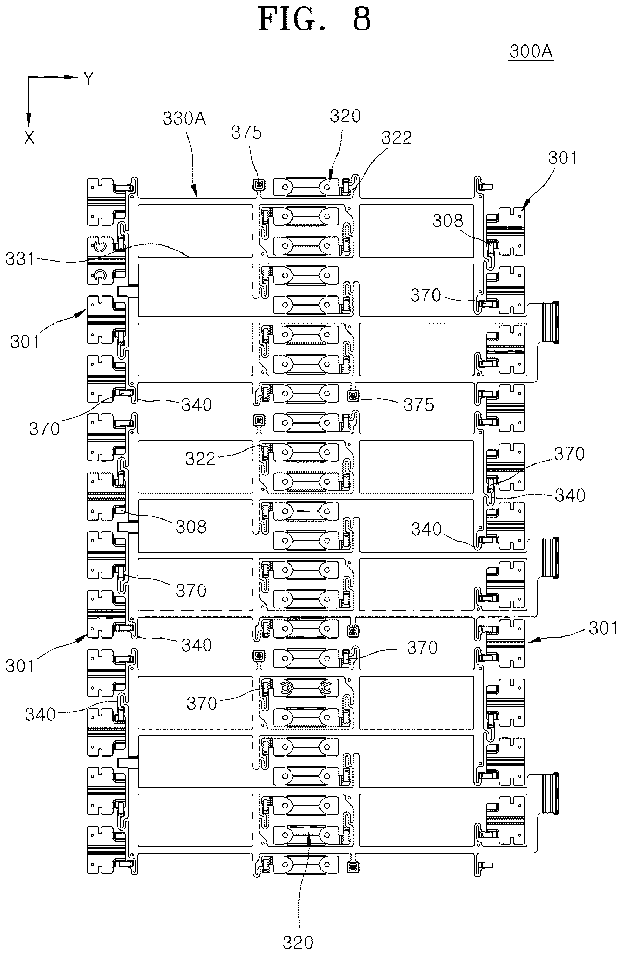

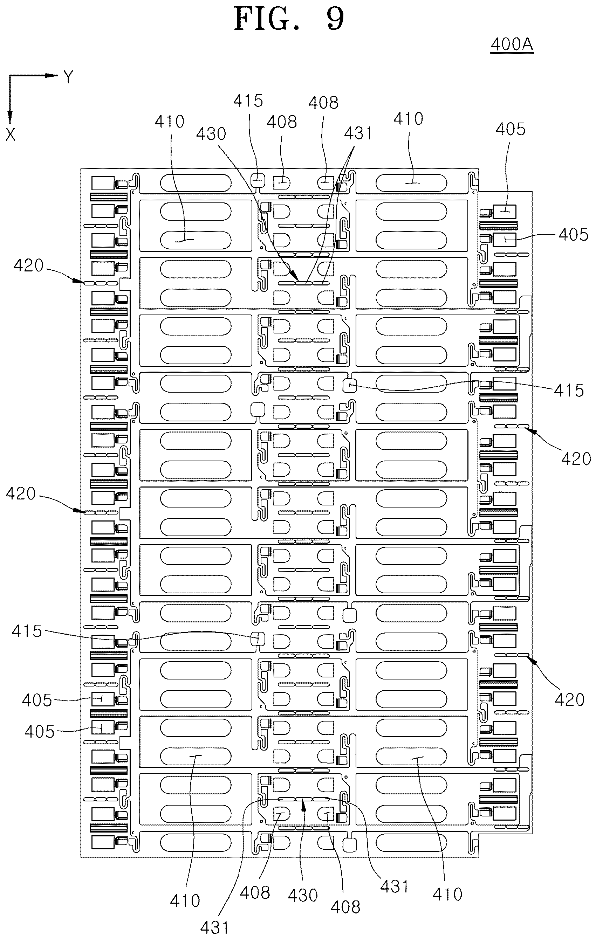

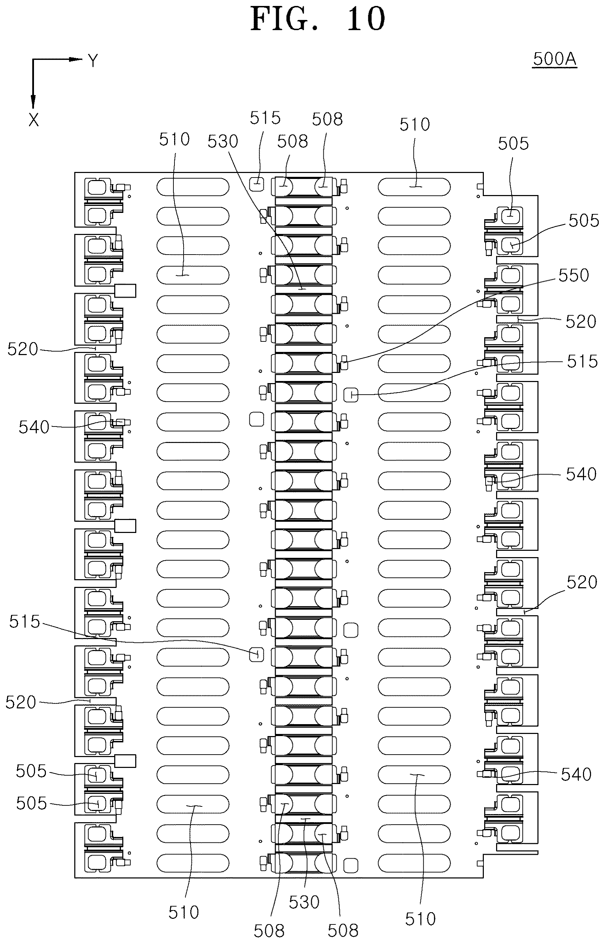

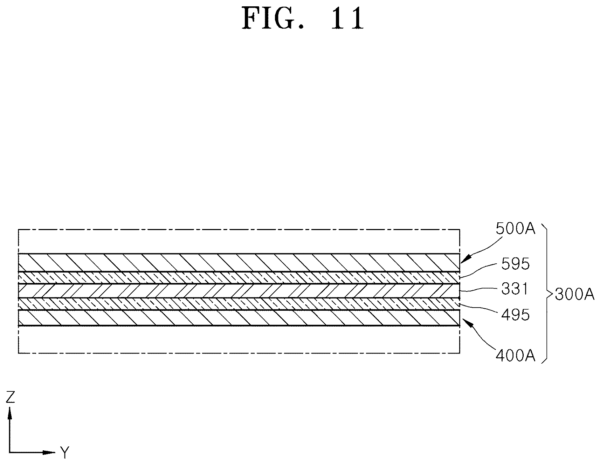

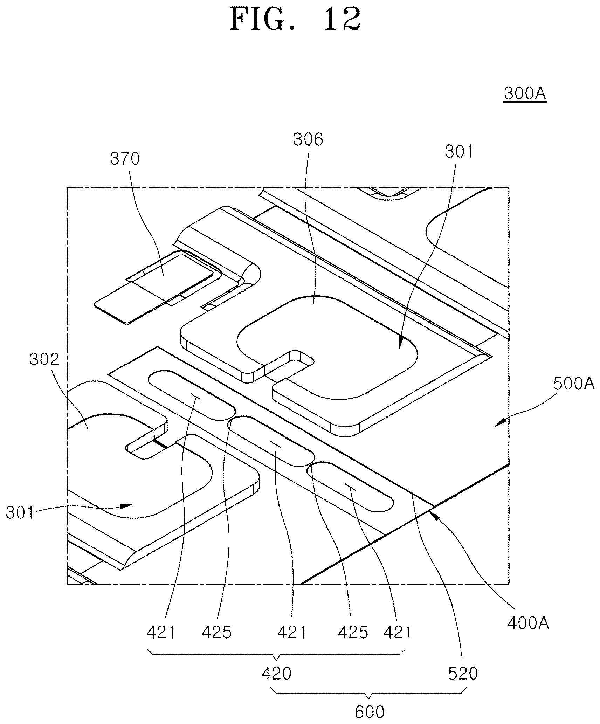

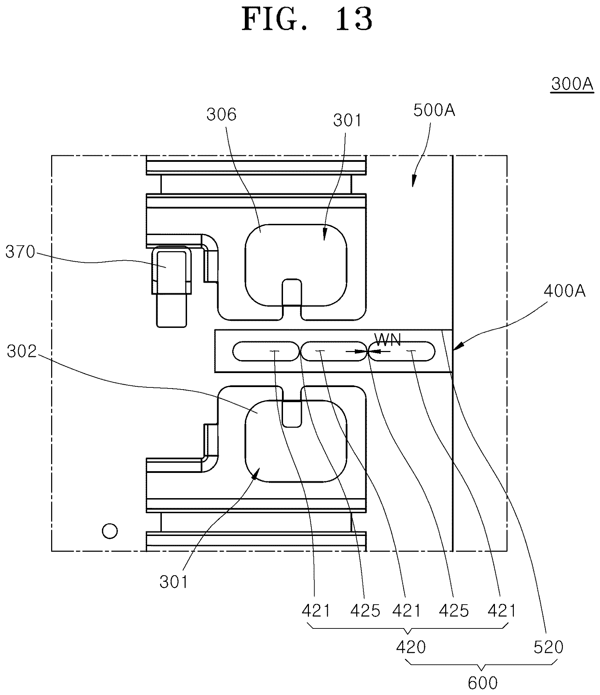

FIG. 1 is an exploded perspective view of a battery pack according to an embodiment of the present disclosure. FIG. 2 is an enlarged perspective view of a cell stack of FIG. 1. FIG. 3 is a cross-sectional view along the line S1-S1 of FIG. 2. FIG. 4 is an exploded perspective view illustrating a configuration of an electrode assembly of FIG. 3. FIG. 5 is a plan view of a busbar-film assembly of FIG. 1. FIG. 6 is an exploded perspective view of the busbar-film assembly of FIG. 5 from above. FIG. 7 is an exploded perspective view of the busbar-film assembly of FIG. 5 from below. FIG. 8 is a plan view of a busbar and a circuit unit of FIG. 6. FIG. 9 is a plan view of a first film of FIG. 6. FIG. 10 is a plan view of a second film of FIG. 6. FIG. 11 is a cross-sectional view along the line S2-S2 of FIG. 5. FIG. 12 is an enlarged view of a region "A" of FIG. 1. FIG. 13 is an enlarged view of a region "B" of FIG. 5.

Referring to FIGS. 1 to 13, a battery pack 100 according to an embodiment of the present disclosure includes a pack housing 101, a plurality of battery cells 201, and a busbar-film assembly 300A. For example, the plurality of battery cells 201 may constitute cell stacks 200 arranged in a line in a longitudinal direction of the pack housing 101, and a plurality of cell stacks 200 may be disposed inside the pack housing 101.

Herein, a first direction may indicate a direction parallel to the longitudinal direction of the battery pack 100 and the cell stack 200, a second direction may indicate a direction parallel to a width direction of the battery pack 100 and the cell stack 200, and a third direction may indicate a direction parallel to a thickness direction of the battery pack 100 and the cell stack 200. The third direction may be the same as a direction of gravity. In FIGS. 1 to 11, the first direction may be a direction parallel to an X-axis, the second direction may be a direction parallel to a Y-axis, and the third direction may be a direction parallel to a Z-axis.

The pack housing 101 may include a housing base 110 and a housing cover 120 coupled to the housing base 110.

The pack housing 101 may further include a first inner frame 111 and a second inner frame 112 that partition an internal space of the pack housing 101 into a plurality of spaces. The first inner frame 111 may extend in the first direction. The second inner frame 112 may extend in the second direction and may intersect the first inner frame 111. Each of the plurality of cell stacks 200 may be accommodated in one of the plurality of spaces divided by the first inner frame 111 and the second inner frame 112.

Each cell stack 200 may include a plurality of the battery cells 201. The battery cell 201 may function as a unit structure that stores and supplies power in the battery pack. The plurality of battery cells 201 may be provided. Some battery cells 201 among the plurality of battery cells 201 may be arranged in a line along a first column C1 inside the pack housing 101, and remaining battery cells 201 among the plurality of battery cells 201 may be arranged in a line along a second column C2.

The first column C1 and the second column C2 may each extend in the first direction. A plurality of battery cells 201 in the first column C1 and a plurality of battery cells 201 in the second column C2 may be disposed adjacent to each other in the second direction.

Herein, an example in which the battery cell 201 is a prismatic lithium ion secondary battery will be described. However, the present disclosure is not limited thereto, and the battery cell 201 may be a lithium polymer battery or a cylindrical battery, for example.

The battery cell 201 according to an embodiment includes an electrode assembly 210, a case 220, a cap plate 230, a pair of terminals 240 and 245, and a cell vent 250.

The electrode assembly 210 may function as a unit structure that performs operations of charging and discharging power in the battery cell 201. The electrode assembly 210 may be accommodated inside the case 220.

The electrode assembly 210 according to an embodiment may include a first electrode 211, a second electrode 212, and a separator 213.

Herein, an example in which the electrode assembly 210 is formed as a stack type in which a plurality of first electrodes 211, a plurality of second electrodes 212, and a plurality of separators 213 are alternately stacked in the first direction will be described. However, the electrode assembly 210 is not limited thereto and may be formed as a jelly roll type in which the first electrodes 211, the second electrodes 212, and the separators 213 are sequentially stacked and wound around a winding axis.

The first electrode 211 may function, for example, as a positive electrode of the electrode assembly 210.

The first electrode 211 according to an embodiment may be formed to have the form of foil including a metal material, such as aluminum or an aluminum alloy. Both, or opposite, surfaces of the first electrode 211 may be disposed perpendicular to the first direction. A type, size, and shape of the first electrode 211 are not particularly limited as long as the first electrode 211 does not cause chemical changes in a secondary battery and is conductive. A shape of the first electrode 211 may be varied into any of various shapes other than a rectangular shape.

The plurality of first electrodes 211 may be provided. The plurality of first electrodes 211 may be arranged in the first direction. The number of first electrodes 211 may be varied according to a charge capacity or the like of the battery cell 201.

The first electrode 211 may include a first active material layer 211a.

The first active material layer 211a may be provided in a form applied on at least a portion of the first electrode 211. Both, or opposite, surfaces of the first electrode 211 may be coated with the first active material layer 211a or only one surface of the first electrode 211 may be coated with the first active material layer 211a.

In an embodiment, the first electrode 211 functions as the positive electrode, and the first active material layer 211a may include a positive electrode active material.

The positive electrode active material may be a compound (lithiated intercalation compound) capable of reversibly intercalating and deintercalating lithium. In an embodiment, at least one composite oxide of lithium and a metal selected from cobalt, manganese, nickel, iron, and a combination thereof may be used.

As an example, the positive electrode active material may include at least one selected from lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}MnzO₂, NCM). Here, 0<x<1, 0<y<1, 0<z<1, and x+y+z=1 may be satisfied. The positive electrode active material may include one selected from LFP, LMFP, and NCM or may include two or all selected from LFP, LMFP, and NCM.

The first active material layer 211a may further include a positive electrode conductive material.

The positive electrode conductive material may impart conductivity to the first active material layer 211a, and any suitable material may be used as the positive electrode conductive material as long as the material does not cause chemical changes and is electrically conductive. Examples of the positive electrode conductive material may include a carbon-based material, such as natural graphite, artificial graphite, carbon black, acetylene black, Ketjen black, carbon fiber, carbon nanofibers, or carbon nanotubes; a metal-based material having the form of a metal powder or metal fiber which contains copper, nickel, aluminum, silver, or the like; a conductive polymer, such as a polyphenylene derivative; or a mixture thereof.

The first active material layer 211a may further include a positive electrode binder.

The positive electrode binder may attach the particles constituting the positive electrode active material properly to each other and also attach the positive electrode active material properly to the first electrode 211.

Examples of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene (PE), polypropylene (PP), polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluorine rubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and a combination thereof.

If the aqueous binder is used as the positive electrode binder, the aqueous binder may further include a cellulose-based compound capable of imparting viscosity. As the cellulose-based compound, one or more types of carboxymethyl cellulose, hydroxypropylmethyl cellulose, methyl cellulose, and an alkali metal salt thereof may be mixed and used. In an embodiment, as the alkali metal, Na, K, or Li may be used.

The dry binder may include a polymer material capable of being fiberized, such as polytetrafluoroethylene, polyvinylidene fluoride, a polyvinylidene fluoride-hexafluoropropylene copolymer, polyethylene oxide, or a combination thereof.

The first electrode 211 may include a first uncoated portion 211b which is not coated with the first active material layer 211a. The first uncoated portion 211b according to an embodiment may be disposed at an end area of the first electrode 211 facing the second direction. However, the first uncoated portion 211b is not limited to such a form and, in an embodiment, may be formed in an entire edge area of the first electrode 211.

The second electrode 212 may function as a negative electrode of the electrode assembly 210.

The second electrode 212 according to an embodiment may be formed to have the form of foil including a metal material, such as copper, a copper alloy, nickel, or a nickel alloy. Both, or opposite, surfaces of the second electrode 212 may be disposed perpendicular to the first direction. A type, size, and shape of the second electrode 212 are not particularly limited as long as the first electrode 211 does not cause chemical changes in a secondary battery and is conductive. A cross-sectional shape of the second electrode 212 may be varied into any of various shapes other than the rectangular shape shown in FIG. 4.

The plurality of second electrodes 212 may be provided. The plurality of second electrodes 212 may be arranged in the first direction. The plurality of first electrodes 211 and the plurality of second electrodes 212 may be alternately disposed in the first direction.

The second electrode 212 may include a second active material layer 212a and a second uncoated portion 212b.

The second active material layer 212a may be provided in a form applied to at least a portion of the second electrode 212. Both, or opposite, surfaces of the second electrode 212 may be coated with the second active material layer 212a or only one surface of the second electrode 212 may be coated with the second active material layer 212a.

In an embodiment, the second electrode 212 functions as the negative electrode, and the second active material layer 212a may include a negative electrode active material.

The negative electrode active material may include a material capable of reversibly intercalating/deintercalating lithium ions, a lithium metal, a lithium metal alloy, a material capable of doping and undoping lithium, or a transition metal oxide.

The material capable of reversibly intercalating/deintercalating lithium ions may include a carbon-based negative electrode active material, for example, crystalline carbon, amorphous carbon, or a combination thereof. Examples of the crystalline carbon may include graphite, such as natural graphite or artificial graphite having a shapeless, plate-like, flake-like, spherical, or fibrous form. Examples of the amorphous carbon may include soft carbon, hard carbon, mesophase pitch carbide, or fired coke.

The lithium metal alloy may include an alloy of lithium and a metal selected from Na, K, Rb, Cs, Fr, Be, Mg, Ca, Sr, Si, Sb, Pb, In, Zn, Ba, Ra, Ge, Al, and Sn.

As the material capable of doping and undoping lithium, a Si-based negative electrode active material or a Sn-based negative electrode active material may be used. The Si-based negative electrode active material may be silicon, a silicon-carbon composite, SiOₓ, wherein 0<x≤2, a Si-Q alloy, wherein Q is selected from an alkali metal, an alkaline earth metal, a Group 13 element, a Group 14 element (excluding Si), a Group 15 element, a Group 16 element, a transition metal, a rare earth element, and a combination thereof, or a combination thereof. The Sn-based negative electrode active material may be Sn, SnO₂, a Sn-based alloy, or a combination thereof.

The silicon-carbon composite may be a composite of silicon and amorphous carbon. According to an embodiment, the silicon-carbon composite may be in the form of silicon particles and amorphous carbon of which surfaces of the silicon particles are coated. For example, the silicon-carbon composite may include a secondary particle (core) formed by bonding silicon primary particles and an amorphous carbon coating layer (shell) located on a surface of the secondary particle. The amorphous carbon may also be located between the silicon primary particles, and, thus, for example, the silicon primary particles may be coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles and an amorphous carbon coating layer located on a surface of the core.

The Si-based negative electrode active material or Sn-based negative electrode active material may be used after being mixed with a carbon-based negative electrode active material.

The second active material layer 212a may further include a negative electrode conductive material and a negative electrode binder.

The negative electrode conductive material may impart conductivity to the second active material layer 212a, and any suitable material may be used as the negative electrode conductive material as long as the material does not cause chemical changes and is electrically conductive. Examples of the negative electrode conductive material may include a carbon-based material, such as natural graphite, artificial graphite, carbon black, acetylene black, Ketjen black, carbon fiber, carbon nanofibers, or carbon nanotubes; a metal-based material having the form of a metal powder or metal fiber which contains copper, nickel, aluminum, silver, or the like; a conductive polymer, such as a polyphenylene derivative; or a mixture thereof.

The negative electrode binder may attach particles constituting the negative electrode active material properly to each other and also attach the negative electrode active material properly to the second electrode 212.

Examples of the negative electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, PE, PP, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluorine rubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and a combination thereof.

If the aqueous binder is used as the negative electrode binder, the aqueous binder may further include a cellulose-based compound capable of imparting viscosity. As the cellulose-based compound, one or more types of carboxymethyl cellulose, hydroxypropylmethyl cellulose, methyl cellulose, and an alkali metal salt thereof may be mixed and used. In an embodiment, as the alkali metal, Na, K, or Li may be used.

The dry binder may include a polymer material capable of being fiberized, such as polytetrafluoroethylene, polyvinylidene fluoride, a polyvinylidene fluoride-hexafluoropropylene copolymer, polyethylene oxide, or a combination thereof.

The second electrode 212 may include a second uncoated portion 212b which is not coated with the second active material layer 212a. The second uncoated portion 212b according to an embodiment may be disposed at an end area of the second electrode 212. However, the second uncoated portion 212b is not limited to such a form and, in an embodiment, may be formed in an entire edge area of the second electrode 212.

The separator 213 may be disposed between the first electrode 211 and the second electrode 212. The separator 213 may prevent or substantially prevent a short circuit between the first electrode 211 and the second electrode 212 while allowing lithium ions to move between the first electrode 211 and the second electrode 212. In an embodiment, the separator 213 may be disposed to entirely surround a surface area of the electrode assembly 210. Accordingly, the separator 213 may prevent or substantially prevent the first electrode 211 and the second electrode 212 from being directly exposed to the outside of the electrode assembly 210.

As the separator 213, PE, PP, polyvinylidene fluoride, or a multilayer thereof having two or more layers may be used, and a mixed multilayer such as a PE/PP double-layered separator, a PE/PP/PE triple-layered separator, or a PP/PE/PP triple-layered separator may be used.

The separator 213 may include a porous substrate and a coating layer which includes an organic material, an inorganic material, or a combination thereof and is located on one surface or both, or opposite, surfaces of the porous substrate.

The porous substrate may be a polymer film formed of any polymer selected from polyolefins, such as PE or PP, polyesters, such as polyethylene terephthalate (PET) or polybutylene terephthalate, polyamide, polyimide, polycarbonate, polyether ketone, polyaryl ether ketone, polyetherimide, polyamideimide, polybenzimidazole, polyethersulfone, polyphenylene oxide, a cyclic olefin copolymer, polyphenylene sulfide, polyethylene naphthalate, glass fiber, and polytetrafluoroethylene (e.g., Teflon), or a copolymer or mixture of two or more types thereof.

The organic material may include a polyvinylidene fluoride-based polymer or a (meth)acrylic-based polymer.

In an embodiment, the inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present disclosure is not limited thereto.

The organic material and the inorganic material may be mixed and present in one coating layer or may be present in a form in which a coating layer including an organic material and a coating layer including an inorganic material are stacked.

The electrode assembly 210 according to an embodiment may further include a first tab 214 and a second tab 215.

The first tab 214 may be connected to the first electrode 211.

The first tab 214 according to an embodiment may have a form of a foil extending from the first uncoated portion 211b of the first electrode 211 in the second direction. The first tab 214 may have a generally rectangular shape. However, a shape of the first tab 214 is not limited thereto and may have any of various shapes.

In an embodiment, the first tab 214 may be formed integrally with the first electrode 211. For example, the first tab 214 may be a remaining area of the first uncoated portion 211b that remains after a portion of the first uncoated portion 211b is cut or removed through notching processing or the like. In an embodiment, the first tab 214 may be manufactured separately from the first electrode 211 and then connected to the first uncoated portion 211b through welding or the like. In an embodiment, a material of the first tab 214 may be the same as a material of the first electrode 211.

A plurality of first tabs 214 may be provided. The first tabs 214 may individually extend from the first uncoated portions 211b of different first electrodes 211. The adjacent first tabs 214 may be disposed to face each other in the first direction. That is, the plurality of first tabs 214 may be arranged in the first direction. The adjacent first tabs 214 may be disposed parallel to each other. The adjacent first tabs 214 may be in contact with each other or may be spaced apart from each other by a thickness of the separator 213.

The plurality of first tabs 214 may be provided in each first electrode 211. As an example, a pair of first tabs 214 may be formed in each first electrode 211. The pair of first tabs 214 formed in each first electrode 211 may be arranged in the third direction.

The second tab 215 may be connected to the second electrode 212.

The second tab 215 according to an embodiment may have a form of a foil extending from the second uncoated portion 212b of the second electrode 212 in the second direction. Extending directions of the first tab 214 and the second tab 215 may be opposite directions. The second tab 215 may have a generally rectangular shape. However, a shape of the second tab 215 is not limited thereto and may have any of various shapes.

In an embodiment, the second tab 215 may be formed integrally with the second electrode 212. For example, the second tab 215 may be a remaining area of the second uncoated portion 212b that remains after a portion of the second uncoated portion 212b is cut or removed through notching processing or the like. In an embodiment, the second tab 215 may be manufactured separately from the second electrode 212 and then connected to the second uncoated portion 212b through welding or the like. In an embodiment, a material of the second tab 215 may be the same as a material of the second electrode 212.

A plurality of second tabs 215 may be provided. The second tabs 215 may individually extend from the second uncoated portions 212b of different second electrodes 212. The adjacent second tabs 215 may be disposed to face each other in the first direction. That is, the plurality of second tabs 215 may be arranged in the first direction. The adjacent second tabs 215 may be disposed parallel to each other. The adjacent second tabs 215 may be in contact with each other or may be spaced apart from each other by a thickness of the separator 213.

The plurality of second tabs 215 may be provided in each second electrode 212. As an example, a pair of second tabs 215 may be formed in each second electrode 212. The pair of second tabs 215 formed in each second electrode 212 may be arranged in the third direction.

The case 220 may generally form an exterior of the battery cell 201 and may accommodate the electrode assembly 210. In an embodiment, the case 220 may include a conductive metal material, such as aluminum, an aluminum alloy, or nickel-plated steel.

The case 220 according to an embodiment may include a bottom portion 221, a first side portion 222, and a second side portion 223.

The bottom portion 221 may form a lower exterior of the case 220. The bottom portion 221 according to an embodiment may have a rectangular plate shape. The bottom portion 221 may be disposed to face a bottom surface of the housing base 110. The bottom portion 221 may be disposed to face the bottom surface of the housing base 110 in the third direction.

The first side portion 222 may extend from the bottom portion 221 and may form a portion of a side exterior of the case 220.

The first side portion 222 according to an embodiment may have a rectangular plate shape extending from the bottom portion 221 in the third direction. The first side portion 222 may be disposed perpendicular to the second direction. A lower end portion of the first side portion 222 may be connected to an edge of the bottom portion 221 disposed parallel to the first direction.

A pair of first side portions 222 may be provided. The pair of first side portions 222 may be disposed to be spaced by an interval (e.g., a predetermined interval) from and face each other in the second direction. The pair of first side portions 222 may be disposed parallel to each other.

The second side portion 223 may extend from the bottom portion 221 and may form a remaining portion of the side exterior of the case 220.

The second side portion 223 according to an embodiment may have a rectangular plate shape extending from the bottom portion 221 in the third direction. The second side portion 223 may be disposed to intersect the first side portion 222. For example, the second side portion 223 may be disposed perpendicular to the first direction.

A lower portion of the second side portion 223 may be connected to an edge of the bottom portion 221 disposed parallel to the second direction. An area of the second side portion 223 may be greater than an area of the first side portion 222.

A pair of second side portions 223 may be provided. The pair of second side portions 223 may be disposed to be spaced by an interval (e.g., a predetermined interval) from and face each other in the first direction. The pair of second side portions 223 may be disposed parallel to each other.

The cap plate 230 may be coupled to the case 220 and may seal the case 220.

The cap plate 230 according to an embodiment may be formed to have a flat plate shape. The cap plate 230 may be disposed to face the case 220 in the third direction. As an example, an inner surface of the cap plate 230 may be disposed to face an open upper surface of the case 220. The cap plate 230 may be disposed parallel to the bottom portion 221 of the case 220 and the housing cover 120.

The terminals 240 and 245 may be coupled to the cap plate 230 and may protrude outward from the cap plate 230. The terminals 240 and 245 may be electrically connected to the electrode assembly 210.

The terminals 240 and 245 according to an embodiment may pass through the cap plate 230 in the third direction. Upper end portions of the terminals 240 and 245 may protrude outward from the cap plate 230, and lower end portions of the terminals 240 and 245 may protrude to the inside of the case 220. A specific shape of the terminals 240 and 245 is not limited to the shape shown in FIGS. 1 to 3 and may be any of various shapes.

The terminals 240 and 245 may be formed of an electrically conductive material, such as aluminum, nickel, or copper.

A pair of terminals 240 and 245 may be provided. The pair of terminals 240 and 245 may be disposed on the cap plate 230 to be spaced by an interval (e.g., a predetermined interval) from each other in the second direction.

The pair of terminals 240 and 245 may be individually connected to the first electrode 211 and the second electrode 212 of the electrode assembly 210. For example, one terminal 240 of the pair of terminals 240 and 245 may function as a positive terminal of the battery cell 201, and another terminal 245 of the pair of terminals 240 and 245 may function as a negative terminal.

As an example, one terminal 240 of the pair of terminals 240 and 245 may be connected to the first tab 214. In an embodiment, the terminal 240 of the pair of terminals 240 and 245 may be indirectly connected to the first tab 214 through a current collector 241 welded to the first tab 214. In an embodiment, the terminal 240 may be directly connected to the first tab 214.

Additionally, the terminal 245 of the pair of terminals 240 and 245 may be connected to the second tab 215. In an embodiment, the terminal 245 of the pair of terminals 240 and 245 may be indirectly connected to the second tab 215 through a current collector 246 welded to the second tab 215. In an embodiment, the terminal 245 may be directly connected to the second tab 215.

An insulator G may be installed between the electrode assembly 210 and the cap plate 230. A pair of insulators G may be provided. The pair of insulators G may be spaced apart from each other in the second direction between the electrode assembly 210 and the cap plate 230. The pair of insulators G may be disposed to individually surround different terminals 240 and 245. The insulator G may be formed of an insulating material, such as PE, PP, PET, or rubber.

The cell vent 250 may be provided in the cap plate 230 and may be opened/closed in response to an internal pressure of the case 220. The cell vent 250 may provide a discharge path for gases, flames, smoke, or the like generated inside the case 220 if the internal pressure of the case 220 increases to a certain (e.g., a set) magnitude or more due to an overcurrent, thermal runaway, or the like. The cell vent 250 may be disposed between the pair of terminals 240 and 245. A longitudinal direction of the cell vent 250 to be described below may be a direction parallel to the second direction, and a width direction of the cell vent 250 may be a direction parallel to the first direction.

In an embodiment, the cell vent 250 may include a vent hole 251 and a vent plate 252.

The vent hole 251 may be formed to have a shape of a hole passing through the cap plate 230 in the third direction. A lower side of the vent hole 251 may be connected to an internal space of the case 220. An upper side of the vent hole 251 may be connected to an external space of the cap plate 230. A cross-sectional shape of the vent hole 251 may have any of various shapes, such as an oval shape, a circular shape, and a polygonal shape.

The vent plate 252 may be opened or closed in response to a change in internal pressure of the cell case 220. That is, the vent plate 252 may seal the case 220 by maintaining a closed state during normal operation of the battery cell 201. The vent plate 252 may be opened as the internal pressure of the cell case 220 increases to a certain (e.g., a set) magnitude or more due to overcharging of the battery cell 201 or an outbreak of fire and may discharge flames, gases, smoke, or the like generated from the inside of the cell case 220 to the outside of the cell case 220.

The vent plate 252 according to an embodiment may be formed to have a flat plate shape. The vent plate 252 may be disposed to face the vent hole 251 in the third direction. A thickness of the vent plate 252 may be smaller than a thickness of the cap plate 230. An upper surface of the vent plate 252 may be coupled to a lower surface of the cap plate 230 through any of various types of coupling methods including welding, bolting, fitting, and the like. In an embodiment, the vent plate 252 may be inserted into the vent hole 251, and a peripheral surface of the vent plate 252 may be coupled to an inner surface of the vent hole 251.

The busbar-film assembly 300A includes a plurality of first busbars 301, a first film 400A, and a second film 500A. Each of the plurality of first busbars 301 electrically connects the terminals 240 and 245 of a pair of battery cells 201 disposed adjacent to each other among the plurality of battery cells 201.

For example, the first busbar 301 electrically connects a pair of terminals 240 and 245 which are adjacent to each other in the first direction and are disposed relatively farther away from the second column C2 among a plurality of terminals 240 and 245 of the plurality of battery cells 201 belonging to the first column C1.

In addition, the first busbar 301 electrically connects a pair of terminals 240 and 245 which are adjacent to each other in the first direction and are disposed relatively farther away from the first column C1 among a plurality of terminals 240 and 245 of the plurality of battery cells 201 belonging to the second column C2.

For example, one side 302 of the first busbar 301 may be coupled to the positive terminal 240 through welding, and another side 306 of the first busbar 301 may be coupled to the negative terminal 245 through welding.

The busbar-film assembly 300A may further include a plurality of second busbars 320. Each of the plurality of second busbars 320 may electrically connect the terminal 240 or 245 of the battery cell 201 belonging to the first column C1 to the terminal 240 or 245 of the battery cell 201 belonging to the second column C2.

For example, the second busbar 320 may electrically connect a first terminal, which is closer to the second column C2 among the terminals 240 and 245 of a battery cell 201 belonging to the first column C1, to a terminal which is closest to the first terminal and has opposite polarity and is included in a battery cell 201 belonging to the second column C2.

The plurality of second busbars 320 may be disposed in the first direction between the plurality of first busbars 301 disposed at both, or opposite, sides of the busbar-film assembly 300A. A side of the second busbar 320 in a longitudinal direction may be welded and coupled to a terminal 240 or 245 of the battery cell 201 belonging to the first column C1, and another side of the second busbar 320 in the longitudinal direction may be welded and coupled to a terminal 240 or 245 of the battery cell 201 belonging to the second column C2.

The first film 400A and the second film 500A may be coupled to each other with the plurality of first busbars 301 and the plurality of second busbars 320 interposed therebetween. In an embodiment, the first film 400A and the second film 500A may be flexible films that are bendable.

The first film 400A may be located closer to the terminals 240 and 245 than the second film 500A. For example, the second film 500A may be located above the first film 400A in the third direction. The first film 400A may be located to face the terminals 240 and 245, and the second film 500A may be located to face the housing cover 120.

The first film 400A and the second film 500A may have first and second film vent holes 410 and 510 disposed parallel to the cell vents 250 of the battery cell 201. The first film vent holes 410 and the second film vent holes 510 may correspond one-to-one to the cell vents 250. The cell vents 250, the first film vents holes 410, and the second film vent holes 510 may be arranged in a line in the third direction. Accordingly, gases, flames, smoke, or the like discharged from the cell vent 250 to the outside of the case 220 may be discharged without being blocked by the busbar-film assembly 300A.

The busbar-film assembly 300A may further include a circuit unit 330A interposed between the first film 400A and the second film 500A and electrically connected to the first busbar 301. The circuit unit 330A may also be electrically connected to the second busbar 320.

In an embodiment, the circuit unit 330A may include a flexible circuit body 331 that is bendable, a curved extension 340 that protrudes from the flexible circuit body 331 and extends along a curved path, and a voltage sensing terminal 370 that connects the curved extension 340 to the first busbar 301.

In an embodiment, the flexible circuit body 331 and the curved extension 340 may include a flexible printed circuit (FPC). The curved extension 340 may extend, for example, along a path having an S or U shape. The voltage sensing terminal 370 may include, for example, a nickel (Ni) tab.

The first busbar 301 may further include a sensing terminal connection portion 308 coupled to the voltage sensing terminal 370. The voltage sensing terminal 370 may be connected to the sensing terminal connection portion 308, for example, through welding.

The circuit unit 330A may further include a voltage sensing terminal 370 connected to the second busbar 320 and a curved extension connecting the flexible circuit body 331 to the voltage sensing terminal 370. The second busbar 320 may further include a sensing terminal connection portion 322 coupled to the voltage sensing terminal 370. The voltage sensing terminal 370 may be connected to the sensing terminal connection portion 322, for example, through welding.

The second film 500A may have a first voltage sensing terminal exposure hole 540 that is open to expose the voltage sensing terminal 370 coupled to the first busbar 301, and a second voltage sensing terminal exposure hole 550 that is open to expose the voltage sensing terminal 370 coupled to the second busbar 320.

The voltage sensing terminal 370 may be easily welded to the sensing terminal connection portion 308 through the first voltage sensing terminal exposure hole 540. The voltage sensing terminal 370 may be easily welded to the sensing terminal connection portion 322 through the second voltage sensing terminal exposure hole 550.

In an embodiment, the first busbar 301 may be bonded to the terminals 240 and 245 through welding. A first busbar-terminal coupling through-hole 405 that is open such that the first busbar 301 may be welded to the terminals 240 and 245 may be formed in the first film 400A.

For example, a first laser irradiation through-hole 505 may be formed in the second film 500A for a welding laser to be radiated onto a side 302 and another side 306 of the first busbar 301.

In an embodiment, the second busbar 320 may be bonded to the terminals 240 and 245 through welding. A second busbar-terminal coupling through-hole 408 that is open such that the second busbar 320 may be welded to the terminals 240 and 245 may be formed in the first film 400A.

For example, a second laser irradiation through-hole 508 that is open such that a welding laser may be radiated onto a side and another side of the second busbar 320 may be formed in the second film 500A.

In an embodiment, the circuit unit 330A may further include a temperature sensor 375 that measures a temperature of the battery cell 201. The temperature sensor 375 may be connected to the flexible circuit body 331. The first film 400A may have a temperature sensor through-hole 415 that is open such that the temperature sensor 375 is in contact with the battery cell 201. The second film 500A may have a temperature sensor exposure through-hole 515 that is open such that the temperature sensor 375 is not covered by the first film 500A.

The busbar-film assembly 300A may further include a first adhesive layer 495 that couples the first film 400A to the circuit unit 330A, and a second adhesive layer 595 that couples the second film 500A to the circuit unit 330A.

The first adhesive layer 495 and the second adhesive layer 595 may include, for example, double-sided adhesive tape or an adhesive. In an area in which the circuit unit 330A is not located between the first film 400A and the second film 500A, the first adhesive layer 495 and the second adhesive layer 595 may be directly bonded.

The busbar-film assembly 300A has a first deformation area 600 that is deformed by an external force and disposed between a pair of first busbars 301 disposed adjacent to each other among the plurality of first busbars 301.

A plurality of first deformation areas 600 may be arranged in the first direction along the first column C1, and a plurality of first deformation areas 600 may be arranged in the first direction along the second column C2. In an embodiment, the plurality of first deformation areas 600 of the first column C1 and the plurality of first deformation areas 600 of the second column C2 may be disposed non-symmetrically and misaligned with each other.

In the first deformation area 600, the first film 400A may have a first side slot 420 having a plurality of side through-holes 421 spaced apart from each other and disposed in a line. The second film 500A may have a second side slot 520 that overlaps the first side slot 420 in the third direction and is open toward an edge of the second film 500A. The plurality of side through-holes 421 may be arranged in the second direction.

In an embodiment, the first side slot 420 may include a bridge 425, which is ruptured by an external force and extends in a direction intersecting a direction in which the plurality of side through-holes 421 are arranged, such that the plurality of side through-holes 421 are separated. For example, the bridge 425 may extend in the first direction orthogonal to the second direction in which the side through-holes 421 are arranged. When the bridge 425 is ruptured, the plurality of side through-holes 421 may be connected. A plurality of bridges 425 may be provided.

A width WN of the bridge 425 may be smallest at a midpoint of a length of the bridge 425. In an embodiment, for example, a size of the width WN of the bridge 425 at the midpoint of the length of the bridge 425 may be in a range of 0.2 mm to 0.3 mm. In this case, if the battery cell 201 swells inside the housing 101 of the battery pack 100, a tensile strength applied to the busbar-film assembly 300A may be in a range of 42 N to 50 N, and the bridge 425 may be fractured.

In an embodiment, a shape of an edge of the bridge 425 in a width direction may be a concave curved shape. For example, the shape of the edge of the bridge 425 in the width direction may be an hourglass shape. The side through-hole 421 may have, for example, an elliptical shape extending in the second direction.

The busbar-film assembly 300A may have a second deformation area 650 that is deformed by an external force and disposed between a pair of second busbars 320 disposed adjacent to each other among the plurality of second busbars 320.

In the second deformation area 650, the first film 400A may have a first central slot 430 having a plurality of central through-holes 431 spaced apart from each other and arranged in a line. The second film 500A may have a second central slot 530 that overlaps the first central slot 430 and extends in a direction in which the plurality of central through-holes 431 are arranged.

A plurality of second deformation areas 650 may be arranged, for example, in the first direction. The plurality of central through-holes 431 may be arranged in a line, for example, in the second direction orthogonal to the first direction. A shape of the central through-hole 431 may be, for example, an elliptical shape extending in the second direction. A shape of the second central slot 530 may be, for example, a rectangular shape extending in the second direction and having a constant width.

According to the battery pack 100, since a busbar holder supporting the busbars 301 and 320 is removed, and the busbars 301 and 320b are supported by the films 400A and 500A, the battery pack having the same electric capacity can be made lighter and smaller.

Even if swelling occurs in the battery cell 201 included in the battery pack 100, as the deformation areas 600 and 650 of the films 400A and 500A of the busbar-film assembly 300A are deformed, adjacent busbars 301 and 320 are separated. Accordingly, an excessive internal pressure increase of the battery cell 201 and chain thermal runaway of the battery cell 201 due to the excessive internal pressure increase can be suppressed, and disconnection of the circuit unit 330A including the voltage sensing terminal 370 and the temperature sensor 375 can be suppressed, thereby improving durability of the battery pack 100.

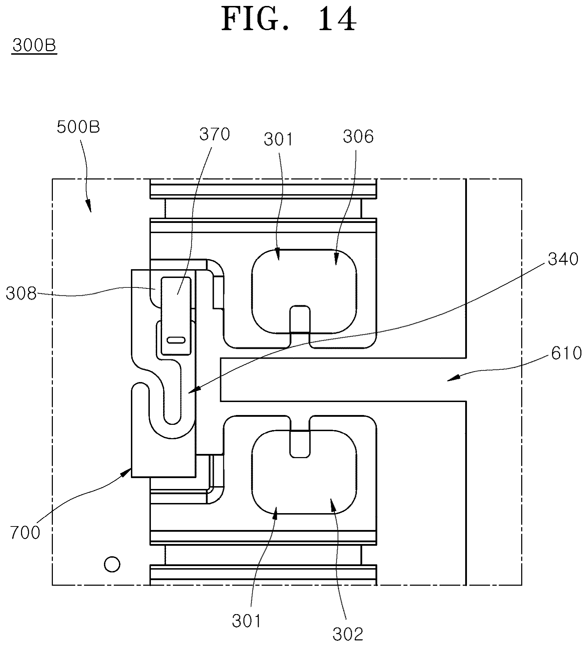

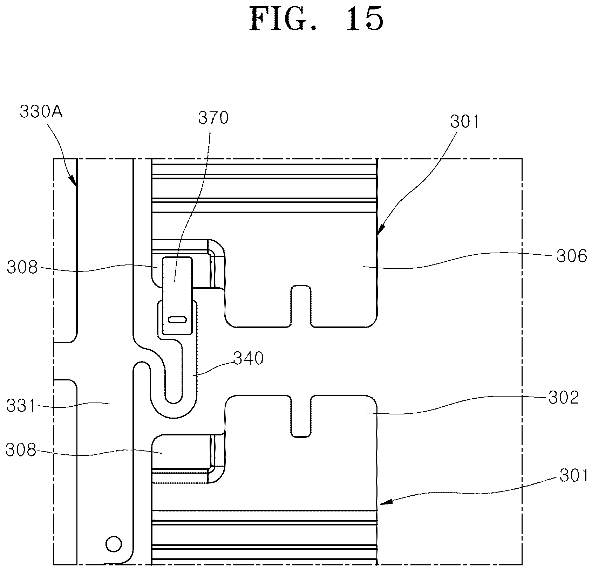

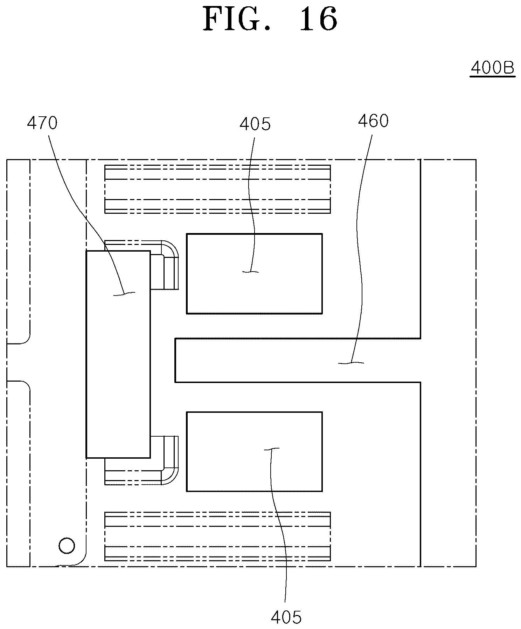

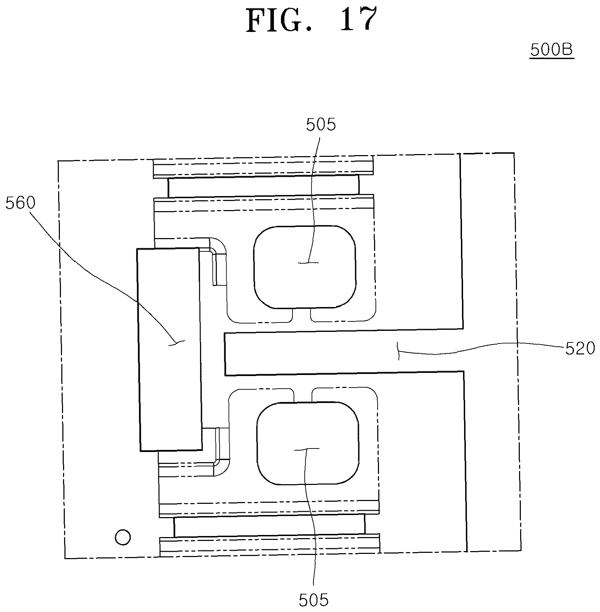

FIG. 14 is an enlarged plan view illustrating a part of a busbar-film assembly included in a battery pack according to another embodiment of the present disclosure and is a view of a part corresponding to FIG. 13. FIG. 15 is a plan view of a busbar and a circuit unit included in the busbar-film assembly of FIG. 14 and is an enlarged view of a part corresponding to FIG. 14. FIG. 16 is a plan view of a first film included in the busbar-film assembly of FIG. 14 and is an enlarged view of a part corresponding to FIG. 14. FIG. 17 is a plan view of a second film included in the busbar-film assembly of FIG. 14 and is an enlarged view of a part corresponding to FIG. 14.

Referring to FIGS. 14 to 17, like the battery pack 100 according to the previously described embodiment of the present disclosure, the battery pack according to the present embodiment of the present disclosure includes a pack housing 101, a plurality of battery cells 201, and a busbar-film assembly 300B. The pack housing 101 and the plurality of battery cells 201 may be the same as the pack housing 101 and the plurality of battery cells 201 included in the battery pack 100 according to the previously described embodiment of the present disclosure and are indicated by the same reference numerals, and redundant description may be omitted.

The busbar-film assembly 300B includes a plurality of first busbars 301, a first film 400B, a second film 500B, and a circuit unit 330A. The plurality of first busbars 301 and the circuit unit 330A may be the same as the first busbars 301 and the circuit unit 330A included in the busbar-film assembly 300A included in the battery pack 100 according to the previously described embodiment of the present disclosure and are indicated by the same reference numerals, and redundant description may be omitted.

The first film 400B and the second film 500B may be coupled to each other with the plurality of first busbars 301 and a plurality of second busbars 320 interposed therebetween. In an embodiment, the first film 400B and the second film 500B may be flexible films that are bendable.

The first film 400B may be disposed closer to terminals 240 and 245 than the second film 500B. For example, the second film 500B may be located above the first film 400B in a third direction. The first film 400B may be located to face the terminals 240 and 245, and the second film 500B may be located to face a housing cover 120.

The first busbar 301 may be bonded to the terminals 240 and 245 (see FIG. 3) through welding. A first busbar-terminal coupling through-hole 405 that is open such that the first busbar 301 may be welded to the terminals 240 and 245 may be formed in the first film 400B.

For example, a first laser irradiation through-hole 505B that is open for a welding laser to be radiated onto the side 302 and the another side 306 of the first busbar 301 may be formed in the second film 500A.

The busbar-film assembly 300B has a first deformation area 610 that is deformed by an external force and disposed between a pair of first busbars 301 disposed adjacent to each other among the plurality of first busbars 301.

In the first deformation area 610, the first film 400B may have a first side slot 460 that is open toward an edge of the first film 400B. The second film 500B may have a second side slot 520 that overlaps the first side slot 460 in the third direction and is open toward an edge of the second film 500B. The first side slot 460 and the second side slot 520 may extend in a second direction.

The busbar-film assembly 300B may further include a third deformation area 700. In the third deformation area 700, a curved extension 340 may not be attached to the first film 400B and the second film 500B and may be deformed by an external force applied to the busbar-film assembly 300B.

In the third deformation area 700, the second film 500B may have a second film curved extension exposure through-hole 560 that is open to expose the curved extension 340 and a voltage sensing terminal 370.

In addition, in the third deformation area 700, the first film 400B may have a first film curved extension exposure through-hole 470 that is open to expose the curved extension 340 and the voltage sensing terminal 370.

Even if swelling occurs in the battery cell 201 included in a battery pack 100, as the deformation areas 610 and 700 of the films 400B and 500B of the busbar-film assembly 300B are deformed, adjacent busbars 301 are separated. Accordingly, an excessive internal pressure increase of the battery cell 201 and chain thermal runaway of the battery cell 201 due to the excessive internal pressure increase can be suppressed, and disconnection of the circuit unit 330A including the voltage sensing terminal 370 and a temperature sensor 375 can be suppressed, thereby improving durability of the battery pack 100.

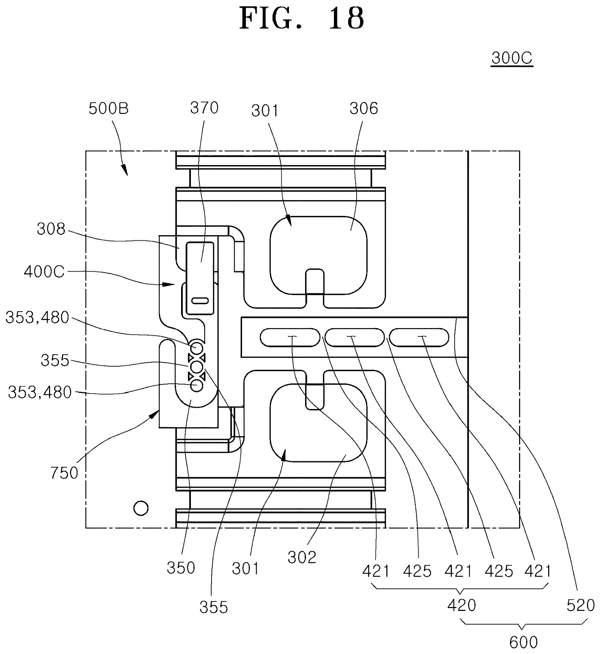

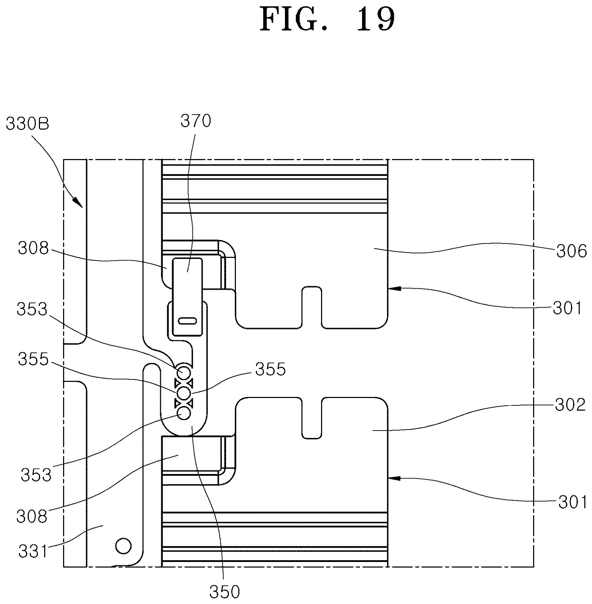

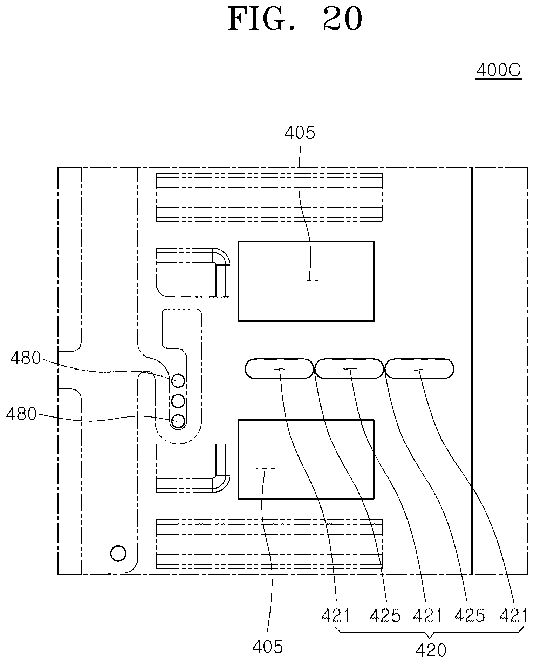

FIG. 18 is an enlarged plan view illustrating a part of a busbar-film assembly included in a battery pack according to another embodiment of the present disclosure and is a view of a part corresponding to FIG. 13. FIG. 19 is a plan view of a busbar and a circuit unit included in the busbar-film assembly of FIG. 18 and is an enlarged view of a part corresponding to FIG. 18. FIG. 20 is a plan view of a first film included in the busbar-film assembly of FIG. 18 and is an enlarged view of a part corresponding to FIG. 18.

Referring to FIGS. 18 to 20, like the battery pack 100 according to FIG. 1, the battery pack according to the present embodiment of the present disclosure includes a pack housing 101, a plurality of battery cells 201, and a busbar-film assembly 300C. The pack housing 101 and the plurality of battery cells 201 may be the same as the pack housing 101 and the plurality of battery cells 201 included in the battery pack 100 of FIG. 1 and are indicated by the same reference numerals, and a redundant description may be omitted.

The busbar-film assembly 300C includes a plurality of first busbars 301, a first film 400C, a second film 500B, and a circuit unit 330B. The plurality of first busbars 301 may be the same as the first busbars 301 included in the busbar-film assembly 300A included in the battery pack 100 of FIG. 1 and are indicated by the same reference numeral, and redundant description may be omitted.

The second film 500B may be the same as the second film 500B included in the busbar-film assembly 300B included in the battery pack of FIG. 14 and is indicated by the same reference numeral, and redundant description may be omitted.

The first film 400C and the second film 500B may be coupled to each other with the plurality of first busbars 301 and a plurality of second busbars 320 interposed therebetween. In an embodiment, the first film 400C and the second film 500B may be flexible films that are bendable.

The first film 400C may be disposed closer to terminals 240 and 245 than the second film 500B. For example, the second film 500B may be located above the first film 400C in a third direction. The first film 400C may be located to face the terminals 240 and 245, and the second film 500B may be located to face a housing cover 120.

The first busbar 301 may be bonded to the terminals 240 and 245 (see FIG. 3) through welding. A first busbar-terminal coupling through-hole 405 that is open such that the first busbar 301 may be welded to the terminals 240 and 245 may be formed in the first film 400C.

The busbar-film assembly 300C has a first deformation area 600 that is deformed by an external force and disposed between a pair of first busbars 301 disposed adjacent to each other among the plurality of first busbars 301. In the first deformation area 600, the first film 400C may have a first side slot 420, and the second film 500B may have a second side slot 520. The first deformation area 600, the first side slot 420, and the second side slot 520 may be the same as the first deformation area 600, the first side slot 420, and the second side slot 520 disclosed in the battery pack 100 of FIG. 1 and are indicated by the same reference numerals, and redundant description may be omitted.

The busbar-film assembly 300C may further include a third deformation area 750. In the third deformation area 750, a curved extension 350 extending from a flexible circuit body 331 of the circuit unit 330B along a curved path may not be attached to the first film 400C and the second film 500B and may be deformed by an external force applied to the busbar-film assembly 300C. The curved extension 350 may be bonded to a voltage sensing terminal 370 through welding.

In the third deformation area 750, the second film 500B has a second film curved extension exposure through-hole 560 (see FIG. 17) that is open to expose the curved extension 350 and the voltage sensing terminal 370.

In the third deformation area 750, the circuit unit 330B may include a plurality of fracture inducing portions 355 which are connected to the curved extension 350 such that a curved shape of the curved extension 350 is maintained, and if an external force is applied, is fractured such that the curved shape of the curved extension 350 is not maintained.

The circuit unit 330B may have a plurality of circuit unit through-holes 353 formed outside the curved extension 350. The curved extension 350 may extend, for example, along an S- or U-shaped path, and the plurality of fracture inducing portions 355 and the plurality of circuit unit through-holes 353 may be located in a portion formed concavely due to a curved path.

The first film 400C may have first film through-holes 480 that overlap the plurality of circuit unit through-holes 353. In an embodiment, when the busbar-film assembly 300C is manufactured or the battery pack is assembled, for example, alignment pins of a jig may be fitted into the plurality of circuit unit through-holes 353 and the plurality of first film through-holes 480. The first film 400C is not attached to the curved extension 350.

Even if swelling occurs in the battery cell 201 included in a battery pack 100, as the deformation areas 610 and 750 of the films 400C and 500B of the busbar-film assembly 300C are deformed, adjacent busbars 301 are separated. Accordingly, an excessive internal pressure increase of the battery cell 201 and chain thermal runaway of the battery cell 201 due to an excessive internal pressure increase can be suppressed, and disconnection of the circuit unit 330B including the voltage sensing terminal 370 and a temperature sensor 375 can be suppressed, thereby improving the durability of the battery pack 100.

According to one or more embodiments of the present disclosure, a busbar holder supporting a busbar is removed, and a busbar is supported by a film, and a battery pack having a same electric capacity as a conventional battery pack can be made lighter and smaller.

According to one or more embodiments of the present disclosure, even if swelling occurs in a battery cell included in a battery pack, as a deformation area of a film of a busbar-film assembly is deformed, adjacent busbars are separated. Accordingly, an excessive internal pressure increase of a battery cell and chain thermal runaway of the battery cell due to the excessive internal pressure increase are suppressed, and disconnection of a circuit unit including a voltage sensing terminal and a temperature sensor is suppressed, thereby improving the durability of the battery pack.

## Claims

1. A battery pack (100) comprising:
a pack housing (101);
a plurality of battery cells (201) accommodated in the pack housing (101) and
comprising terminals (240, 245) protruding to a side (302); and
a busbar-film assembly (300A, 300B, 300C) comprising a plurality of first busbars (301) to allow the terminals (240, 245) of a pair of battery cells (201) adjacent to each other among the plurality of battery cells (201) to be electrically connected, a first film (400A, 400B, 400C) and a second film (500A, 500B, 500C) coupled to each other with the plurality of first busbars (301) therebetween, and a first deformation area (600, 610) deformable by an external force between a pair of first busbars (301) adjacent to each other among the plurality of first busbars (301).

2. The battery pack (100) as claimed in claim 1, wherein, in the first deformation area (600, 610), the first film (400A, 400B, 400C) has a first side slot (420, 460) having a plurality of side through-holes (421) spaced apart from each other and arranged in a line, and
the second film (500A, 500B, 500C) has a second side slot (520) overlapping the first side slot (420, 460) and open toward an edge of the second film (500A, 500B, 500C).

3. The battery pack (100) as claimed in claim 2, wherein the first side slot (420, 460) comprises a bridge (425) configured to be ruptured by an external force and extending in a direction intersecting a direction in which the plurality of side through-holes (421) are arranged, such that the plurality of side through-holes (421) are separated, and
when the bridge (425) is ruptured, the plurality of the side through-holes (421) are connected.

4. The battery pack (100) as claimed in claim 3, wherein a width of the bridge (425) is smallest at a midpoint of a length of the bridge (425).

5. The battery pack (100) as claimed in any one of the preceding claims,
wherein some battery cells (201) of the plurality of battery cells (201) are arranged in a line along a first column,
remaining battery cells (201) of the plurality of battery cells (201) are arranged in a line along a second column, and
the busbar-film assembly (300A, 300B, 300C) further comprises a plurality of second busbars (320) to allow the terminals (240, 245) of the battery cells (201) in the first column to be electrically connected to the terminals (240, 245) of the battery cells (201) in the second column.

6. The battery pack (100) as claimed in claim 5, wherein the busbar-film assembly (300A, 300B, 300C) further comprises a second deformation area (650) which is deformable by an external force and located between a pair of second busbars (320) adjacent to each other among the plurality of second busbars (320).

7. The battery pack (100) as claimed in claim 6, wherein, in the second deformation area (650), the first film (400A, 400B, 400C) has a first central slot (430) having a plurality of central through-holes (431) spaced apart from each other and arranged in a line, and
the second film (500A, 500B, 500C) has a second central slot (530), which extends in a direction in which the plurality of central through-holes (431) are arranged, to overlap the first central slot (430).

8. The battery pack (100) as claimed in any one of the preceding claims,
wherein the busbar-film assembly (300A, 300B, 300C) further comprises a circuit unit (330A, 330B) between the first film (400A, 400B, 400C) and the second film (500A, 500B, 500C) to electrically connect the first busbars (301) thereto.

9. The battery pack (100) as claimed in claim 8, wherein the circuit unit (330A, 330B) comprises:
a flexible circuit body (331) which is bendable;
a curved extension (340, 350) protruding from the flexible circuit body (331) and
extending along a curved path; and
a voltage sensing terminal (370) configured to connect the curved extension (340, 350) to the first busbar (301).

10. The battery pack (100) as claimed in claim 9, wherein the second film (500A, 500B, 500C) has a voltage sensing terminal (370) exposure hole (410) which is open to expose the voltage sensing terminal (370).

11. The battery pack (100) as claimed in claim 9, wherein the busbar-film assembly (300A, 300B, 300C) further comprises a third deformation area (700, 750) in which the curved extension (340, 350) is not attached to the first film (400A, 400B, 400C) and the second film (500A, 500B, 500C) and is deformable by an external force.

12. The battery pack (100) as claimed in claim 11, wherein, in the third deformation area (700, 750), the second film (500A, 500B, 500C) has a second film curved extension exposure through-hole (560) which is open to expose the curved extension (340, 350) and the voltage sensing terminal (370).

13. The battery pack (100) as claimed in claim 12, wherein, in the third deformation area (700, 750), the first film (400A, 400B, 400C) has a first film curved extension exposure through-hole (470) which is open to expose the curved extension (340, 350) and the voltage sensing terminal (370).

14. The battery pack (100) as claimed in claim 12, wherein, in the third deformation area (700, 750), the circuit unit (330A, 330B) comprises a fracture inducing portion (355) which is connected to the curved extension (340, 350) such that a curved shape of the curved extension (340, 350) is maintained, and if an external force is applied, is fractured such that the curved shape of the curved extension (340, 350) is not maintained.

15. The battery pack (100) as claimed in claim 14, wherein the circuit unit (330A, 330B) has a circuit unit through-hole (353) located outside the curved extension (340, 350), and
the first film (400A, 400B, 400C) has a first film through-hole (480) overlapping the circuit unit through-hole (353).
